# EUROPÄISCHE PATENTSCHRIFT

(11) **EP 4 521 994 B1**
(45) Veröffentlichungstag und Bekanntmachung des Hinweises auf die Patenterteilung: **21.01.2026**
(21) Anmeldenummer: 24719538.1
(22) Anmeldetag: 16.04.2024
(51) Int. Cl.: A47B 88/45, A47B 88/463

(54) **VORRICHTUNG, SCHIENENFÜHRUNG UND MÖBEL**
APPARATUS, RAIL GUIDE, AND FURNITURE
APPAREIL, GUIDE DE RAIL ET MEUBLE

(30) Priorität: 24.04.2023 DE 102023110403
(43) Veröffentlichungstag der Anmeldung: 19.03.2025
(73) Patentinhaber: Grass GmbH, 6973 Höchst (AT)
(72) Erfinder: NUSSBAUMER, Thomas, 6951 Lingenau (AT); METZLER, Melanie, 6922 Wolfurt (AT); LUCAS, Tim, 70771 Leinfelden-Echterdingen (DE); MICHIELI, Luca, 33083 Taiedo di Chinos (Pordenone) (IT)
(74) Vertreter: RavensPAT Patentanwälte Partnerschaft mbB
(86) Internationale Anmeldenummer: PCT/EP2024/060225
(87) Internationale Veröffentlichungsnummer: WO 2024/223357

(56) Entgegenhaltungen:
- WO-A1-2020/186276
- DE-A1- 102012 112 157
- US-A1- 2013 307 390

## Beschreibung

### Stand der Technik

Vorrichtungen für die Bewegungssteuerung von zwei Schienenführungen für Möbelteile sind bekannt. Solche Vorrichtungen steuern zwei Schienenführungen wie zwei Teilauszüge oder zwei Vollauszüge. Beispielsweise dienen Bewegungssteuerungs-Vorrichtungen einer kraftunterstützen und/oder gedämpften Bewegung der jeweiligen Bewegungsschienen der beiden Teil- oder Vollauszüge. Dementsprechend wird die Bewegung des Möbelteils relativ zu einem Möbelkorpus, an welchem das Möbelteil über die beiden Schienenführungen angebracht ist, beeinflusst. Beispielsweise sind derartige Möbelteile linear bewegbare Möbelteile wie Schubladen, die an dem Möbelkorpus über die zwei gleichartigen Schienenführungen beweglich aufgenommen sind.

Zum Stand der Technik werden die dem Oberbegriff des Anspruchs 1 entsprechende WO 2020/186276 A1, DE 10 2012 112 157 A1 und US 2013/307390 A1 genannt.

### Aufgabe und Vorteile der Erfindung

Aufgabe der vorliegenden Erfindung ist es, im Möbelbereich Alternativen zur Bewegungsteuerung von zwei Schienenführungen bereitzustellen, insbesondere eine Vorrichtung für die Bewegungssteuerung von zwei Schienenführungen bereitzustellen, welche im Hinblick auf den Zusammenbau und/oder die Montage am Möbelteil verbessert ist.

Diese Aufgabe wird durch die unabhängigen Ansprüche gelöst. Die abhängigen Ansprüche zeigen zweckmäßige und vorteilhafte Weiterbildungen der Erfindung auf.

Die Erfindung geht aus von einer Vorrichtung für die Bewegungssteuerung von zwei Führungseinheiten, wobei die beiden Führungseinheiten jeweils eine Festschiene und eine zur Festschiene verschiebliche Bewegungsschiene umfassen, wobei die Vorrichtung eine erste Ausstoßeinheit und eine zweite Ausstoßeinheit umfasst, die jeweils an einer zugehörigen Führungseinheiten anordenbar und voneinander beabstandet sind, wobei eine Synchronisationseinrichtung mit einem Verbindungselement vorgesehen ist, wobei das Verbindungselement ein separates Bauteil ist, welches die erste Ausstoßeinheit und die zweite Ausstoßeinheit miteinander verbindet, um die beiden Ausstoßeinheiten zu synchronisieren, wobei die beiden Ausstoßeinheiten gleich aufgebaut sind, und wobei jede Ausstoßeinheit jeweils ein Adapterorgan aufweist, an welchem ein jeweiliger Endabschnitt des Verbindungselements lösbar anbringbar ist.

Zum Beispiel ist das Verbindungselement als Synchronisationsstange ausgebildet. Zum Beispiel ist ein maximaler Außendurchmesser des Verbindungselements geringer als ein z. B. mittlerer Außendurchmesser des Adapterorgans oder geringer als z. B. ein maximaler Außendurchmesser des Adapterorgans.

Beispielsweise ist das Adapterorgan in beide mögliche Drehrichtungen drehbar aufgenommen an der Ausstoßeinheit. Zum Beispiel ist die Drehachse des Adapterorgans quer zur linearen Verschieberichtung des Schlittens zum Grundbauteil ausgerichtet.

Beispielsweise sind die Ausstoßeinheiten für ein Möbelteil simultan wirkend ausgebildet, beispielsweise zusätzlich als Schubladen-Öffnungsvorrichtungen.

Zum Beispiel umfasst eine Ausstoßeinheit das Adapterelement, ein Grundbauteil, einen Schlitten, einen Kraftspeicher, ein Verriegelungsorgan, eine Herzkurve und ein Klinkenorgan.

Beispielsweise umfasst das Grundbauteil ein Anbindungsgehäuse, das z. B. lösbar mit dem restlichen Grundbauteil verbindbar ist. Beispielsweise umfasst das Anbindungsgehäuse einen Anbringabschnitt für das Adapterorgan. Beispielsweise ist an dem Anbindungsgehäuse das Verriegelungsorgan aufgenommen zum Beispiel gelagert. Beispielsweise ist an dem Anbindungsgehäuse oder an dem restlichen Grundbauteil ein gebogenes Drahtbauteil aufgenommen. Beispielsweise umfasst das Drahtbauteil das Verrieglungsorgan, zum Beispiel als ein umgebogenes Ende des Drahtbauteils. Zum Beispiel ist ein anderes umgebogenes Ende des Drahtbauteils fest aber z. B. lösbar angebracht an einer Lagerstelle am Grundbauteil.

Beispielsweise ist das Verriegelungsorgan als Endabschnitt eines Drahtbauteils ausgebildet. Beispielsweise ist das Verriegelungsorgan als ein Abschnitt eines elastisch verformbaren Drahtelements ausgebildet. Beispielsweise ist das Verriegelungsorgan als ein Abschnitt eines Drahtelements ausgebildet, wobei das Drahtelement einen geraden Abschnitt und einen gebogene Abschnitt umfasst, die miteinander z. B. einstückig verbunden sind.

Beispielsweise ist die Position des Anbindungsgehäuses relativ zum Grundbauteil einstellbar. Beispielsweise ist die Position des Anbindungsgehäuses relativ zum Grundbauteil in Schließrichtung und/oder in Öffnungsrichtung einstellbar. Beispielsweise ist die Position des Anbindungsgehäuses relativ zum Grundbauteil stufenlos einstellbar, zum Beispiel in Schließrichtung und/oder in Öffnungsrichtung stufenlos einstellbar. Beispielsweise ist die Position des Anbindungsgehäuses relativ zum Grundbauteil manuell bzw. ohne ein Werkzeug einstellbar, beispielsweise durch Drehen einer Rändelschraube, die z. B. am Grundbauteil drehbar aufgenommen ist.

Eine Führungseinheit, die als Teilauszug ausgebildet ist, umfasst eine mit einem Möbelkorpus verbindbare Festschiene und eine mit dem Möbelteil koppelbare Bewegungsschiene. Zum Beispiel sind die Festschiene und die Bewegungsschiene teleskopierbar zueinander verschiebbar.

Bei einem Vollauszug ist zwischen der Festschiene und der Bewegungsschiene eine Mittelschiene vorhanden. Zum Beispiel sind die Festschiene, die Mittelschiene und die Bewegungsschiene teleskopierbar zueinander verschiebbar.

In der Regel sind die Schienen einer Führungseinheit, eines Teilauszuges oder eines Vollauszuges, über Lageranordnungen zueinander verschieblich, zum Beispiel umfassend Wälzkörper-Lagermittel wie z. B. Kugel- und/oder Walzenlagerkörper. Die Lageranordnungen wirken zwischen benachbarten Schienen der Führungseinheit.

Zum Beispiel bei Möbeln mit vergleichsweise großen Fronten, wie z. B. bei vergleichsweise breiten Schubladen, die über zwei Führungseinheiten an einem Möbelkorpus geführt sind, und die über eine Touch-Latch-Funktionalität geöffnet werden, wird z. B. eine synchrone Touch-Latch-Auslösung eingerichtet. Demgemäß wird die Verriegelungsstellung der Vorrichtung durch eine Bewegung des Schlittens in die Schließrichtung aufhebbar.

Der Kern der Erfindung liegt darin, dass das Adapterorgan einen Aufnahmeabschnitt mit einem Aufnahmevolumen bereitstellt, in welchem der Endabschnitt des Verbindungselements positionsfest unterbringbar ist relativ zum Adapterorgan, und wobei das Aufnahmevolumen bezogen auf den angebrachten Endabschnitt des Verbindungselements über einen Teilumfang zu einer Längsachse des Endabschnitts des Verbindungselements von einer festen Wand des Adapterorgans umgeben ist und über einen zum Teilumfang verbleibenden umfänglichen Abschnitt ein Verschlussabschnitt des Adapterorgans vorhanden ist, wobei der angebrachte Endabschnitt des Verbindungselements an der festen Wand in Anlage kommt, und wobei der Verschlussabschnitt am Adapterorgan schwenkbar angelenkt ist und aus einer Offenstellung des Verschlussabschnitts am Adapterorgan, in welcher das Aufnahmevolumen über den verbleibenden umfänglichen Abschnitt offen ist für ein Einbringen des Endabschnitts des Verbindungselements, reversibel in eine gesicherte Schließstellung des Verschlussabschnitts verschwenkbar ist, wobei in der Schließstellung des Verschlussabschnitts der verbleibende umfänglichen Abschnitt geschlossen ist.

Dies stellt eine montagefreundliche Lösung dar. Bisher musste nachteilig bzw. unter erschwerten Montagebedingungen zum Beispiel eine axiale Einfädelung der Endabschnitte des Verbindungselements an der jeweiligen Ausstoßeinheit vorgenommen werden.

Die mit einem Möbelteil koppelbare Bewegungsschiene ist beispielsweise in eine Öffnungsrichtung und in eine Schließrichtung relativ zur Festschiene linear verschieblich. Zum Beispiel ist die Vorrichtung im angeordneten Zustand an der Führungseinheit für ein kraftunterstütztes Verschieben der Bewegungsschiene aus einer Schließstellung der Bewegungsschiene in die Öffnungsrichtung ausgebildet.

Zum Beispiel umfasst die jeweilige Ausstoßeinheit einen Kraftspeicher, ein Grundbauteil und einen zum Grundbauteil verschieblichen Schlitten, wobei der Schlitten unter der Wirkung des geladenen Kraftspeichers in die Öffnungsrichtung bewegbar ist und im montierten Zustand der Vorrichtung an der Führungseinheit die Bewegungsschiene in die Öffnungsrichtung mitnimmt.

Zum Beispiel umfasst die Vorrichtung eine Verriegelungsanordnung mit einer Herzkurven-Kulissenführung und ein entlang der Herzkurve in Anlage bringbares Verriegelungsorgan. Zum Beispiel, wenn der Kraftspeicher in einer Verriegelungsstellung der Vorrichtung geladen ist, nimmt der Schlitten eine blockierte Stellung ein, wobei ein Verschieben des Schlittens in die Öffnungsrichtung blockiert ist.

Zum Beispiel verbindet das Verbindungselement die beiden Schlitten der beiden Vorrichtungen derart miteinander, dass eine synchronisierte Aufhebung der blockierten Stellung des Schlittens der einen Ausstoßeinheit und des Schlittens der anderen Ausstoßeinheit erfolgt.

Beispielsweise erfolgt eine lineare Bewegung des Schlittens und eine Drehbewegung des Verbindungselements um seine Längsachse mechanisch gekoppelt mittels des Verbindungselements. Zum Beispiel sind der Schlitten und eine Getriebekontur fest bzw. starr z. B. einstückig miteinander verbunden, z. B. an einem Schlitten-Bauteil ausgebildet. Beispielsweise ist die Getriebekontur des Schlittens linear bewegbar, z. B. gemeinsam mit dem restlichen Schlitten linear hin- und her-bewegbar, zum Beispiel verschiebbar bzw. verschieblich. Beispielsweise erfolgt die lineare Schlittenbewegung zeitweise gekoppelt mit einer linearen Bewegung des Möbelteils.

Zum Beispiel ist das Adapterorgan einteilig ausgebildet. Dies ermöglicht eine vorteilhafte Herstellung des Adapterorgans. Beispielsweise besteht das Adapterorgan aus einem KunststoffMaterial. Beispielsweise ist das Adapterorgan ein Kunststoff-Spritzgussteil. Beispielsweise besteht das Adapterorgan alternativ aus einem Metall-Material.

Beispielsweise ist der Verschlussabschnitt des Adapterorgans über ein Filmscharnier mit dem verbleibenden Teil des Adapterorgans verbunden. Ein Filmscharnier ist einfach herstellbar. Zum Beispiel ist das Filmscharnier einstückig mit dem Verschlussabschnitt und mit dem restlichen Teil des Adapterorgans ausgebildet. Ein Filmscharnier ist langlebig bzw. robust. Zum Beispiel ist eine Beweglichkeit wie z. B. eine Flexibilität des Filmscharniers über eine vorgebbare Dicke des Materials, das das Filmscharnier bildet und/oder die Materialeigenschaften des Kunststoffes, aus welchem das Filmscharnier besteht, beeinflussbar. Zum Beispiel ist damit auch eine Vorspannung des geschlossenen Filmscharniers in der Schließstellung vorgebbar.

Zum Beispiel weist das Adapterorgan Rastmittel auf, mit welchen der Verschlussabschnitt in der Schließstellung des Verschlussabschnitts sicherbar ist. Beispielsweise sind ein Abschnitt der Rastmittel an dem Verschlussabschnitt und ein weiterer Teil der Rastmittel an einem Gegenabschnitt am verbleibenden Teil des Adapterorgans vorhanden. Zum Beispiel sind die Rastmittel durch eine Bewegung des Verschlussabschnitts in Richtung des weiteren Teils der Rastmittel in die Schließstellung bringbar. Zum Beispiel ist der Verschlussabschnitt selbsttätig in der Schließstellung verrastbar. Zum Beispiel sind die Rastmittel manuell lösbar aus der verrasteten Stellung.

Zum Beispiel ist der Verschlussabschnitt mit den Rastmitteln verhakbar am Adapterorgan in der Schließstellung des Verschlussabschnitts. Zum Beispiel sind Teilbereiche der Rastmittel elastisch bewegbar z. B. ausweichbar.

Beispielsweise sind die Rastmittel zur Bildung eines Schnappverschluss ausgebildet. Zum Beispiel umfassen die Rastmittel eine Hinterschneidung am Verschlussabschnitt und/oder eine Hinterschneidung am verbleibenden Teil des Adapterorgans. Zum Beispiel weisen die Rastmittel einen Zahnabschnitt auf, der in der Verschlussstellung an einer Rastkante festgehalten ist, z. B. hintergreifend. Beispielsweise erfolgt das Festhalten aufgrund einer Rückstellkraft, die durch die elastische Eigenschaft des Filmscharniers und/oder von Teilbereichen der Rastmittel bereitgestellt ist.

Beispielsweise sind die Außenform des Endabschnitts des Verbindungselements und die Innenform des Aufnahmeabschnitts aufeinander abgestimmt ausgebildet. Damit wird eine sichere Verbindung des Endabschnitts des Verbindungselements mit dem Adapterorgan ermöglicht, zum Beispiel über eine Flächenpressung von aneinander in flächige Anlage bringbare Abschnitte.

Beispielsweise sind die Außenform des Endabschnitts des Verbindungselements und die Innenform des Aufnahmeabschnitts derart ausgebildet, dass in der Schließstellung des Verschlussabschnitts ein Formschluss zwischen dem Endabschnitt des Verbindungselements und dem Adapterorgan besteht. Zum Beispiel umfasst eine Außenform des Endabschnitts des Verbindungselements einen nach außen gewölbten Abschnitt, wobei der nach außen gewölbte Abschnitt und eine vertiefte Ausbildung der Innenform des Aufnahmeabschnitts derart aufeinander abgestimmt sind, dass der Endabschnitt des Verbindungselements und die Innenform des Aufnahmeabschnitts, z. B. eine feste Wand der Innenform, passgenau z. B. spaltfrei oder mit einem vergleichsweise geringen Spalt z. B. nahezu spaltfrei aneinander in Anlage kommen.

Zum Beispiel ist ein Zahnkontur-Abschnitt des Adapterorgans vorhanden, wobei der Zahnkontur-Abschnitt axial versetzt zu dem Aufnahmeabschnitt ausgebildet ist. Axial versetzt bezieht sich auf eine Längsachse des eingesteckt verbundenen Verbindungselements. Beispielsweise ist der Zahnkontur-Abschnitt als ein Ritzelabschnitt ausgestaltet, zum Beispiel ist der Zahnkontur-Abschnitt als regelmäßig gestaltete Außen-Zahnkontur ausgestaltet. Zum Beispiel ist ein maximaler Außendurchmesser des Zahnkontur-Abschnitts gleich mit einem oder geringer als ein Außendurchmesser des Adapterorgans im Bereich des Aufnahmeabschnitts.

Zum Beispiel sind beide Adapterorgane an der jeweiligen Ausstoßvorrichtung gleichartig gestaltet. Dies ist montagefreundlich und wirtschaftlich vorteilhaft. Beispielsweise sind beide Adapterorgane identisch.

Beispielsweise ist der Endabschnitt des Verbindungselements außen in der Grundform zylindrisch gebildet mit einer in Längsrichtung des Verbindungselements sich erstreckenden Passkontur. Zum Beispiel weist das Verbindungselement über seine gesamte Erstreckung bzw. über seine gesamte Länge, umfassend die beiden Endabschnitte und den dazwischen vorhandene restlichen Abschnitt eine einheitliche Gestalt auf. Damit ist ein Ausgangsbauteil, welches das Verbindungselement bildet, beliebig ablängbar auf eine gewünschte Länge.

Zum Beispiel ist die Passkontur linienförmig nach außen vorstehend ausgebildet an einer Grundform des Verbindungselements, wobei die Grundform des Verbindungselements z. B. zylindrisch ist bzw. eine Zylinderform ist.

Zum Beispiel weist die Passkontur zwei radial zur Längsachse gegenüberliegende Erhebungen auf. Zum Beispiel beziehen sich die Erhebungen auf eine z. B. zylindrische Außen-Grundform des Verbindungselements.

Zum Beispiel umfasst die Passkontur zwei diametral außen gegenüberliegende, parallel verlaufende nach außen vorstehende Erhebungen auf, die z. B. wulstförmig bzw. nach außen konvex sind.

Zum Beispiel sind die zwei gegenüberliegenden Erhebungen identisch gestaltet, zum Beispiel durchgehend in Längsrichtung am Verbindungselement ausgebildet.

Zum Beispiel weist der Verschlussabschnitt eine am Verbindungselement in Anlage bringbare Anlagekontur auf, welche auf die Außenkontur des Verbindungselements zur passenden Anlage in der Schließstellung des Verschlussabschnitts abgestimmt ist. Damit ist das Verbindungselement drehfest mit dem Adapterorgan verbindbar.

Beispielsweise wird eine Schienenführung vorgeschlagen, die zwei Führungseinheiten umfasst mit jeweils einer mit einem Möbelkorpus verbindbaren Festschiene und einer mit einem Möbelteil koppelbaren Bewegungsschiene, wobei eine Vorrichtung nach einer der oben beschriebenen Ausbildungen vorhanden ist.

Zum Beispielwird ein Möbel mit einem Möbelkorpus und einem bewegbaren Möbelteil vorgeschlagen, wobei eine Schienenführung wie vorgenannt vorgesehen ist.

### Figurenbeschreibung

Weiter Merkmale und Vorteile der Erfindung sind anhand von schematisierten Ausführungsbeispielen näher erläutert. Im Einzelnen zeigt:
Fig. 1 eine Schienenführung mit zwei Führungseinheiten, an der jeweils eine Ausstoßeinheit angebracht ist, in perspektivischer Ansicht,
Fig. 2 einen vergrößerten Ausschnitt aus Fig. 1,

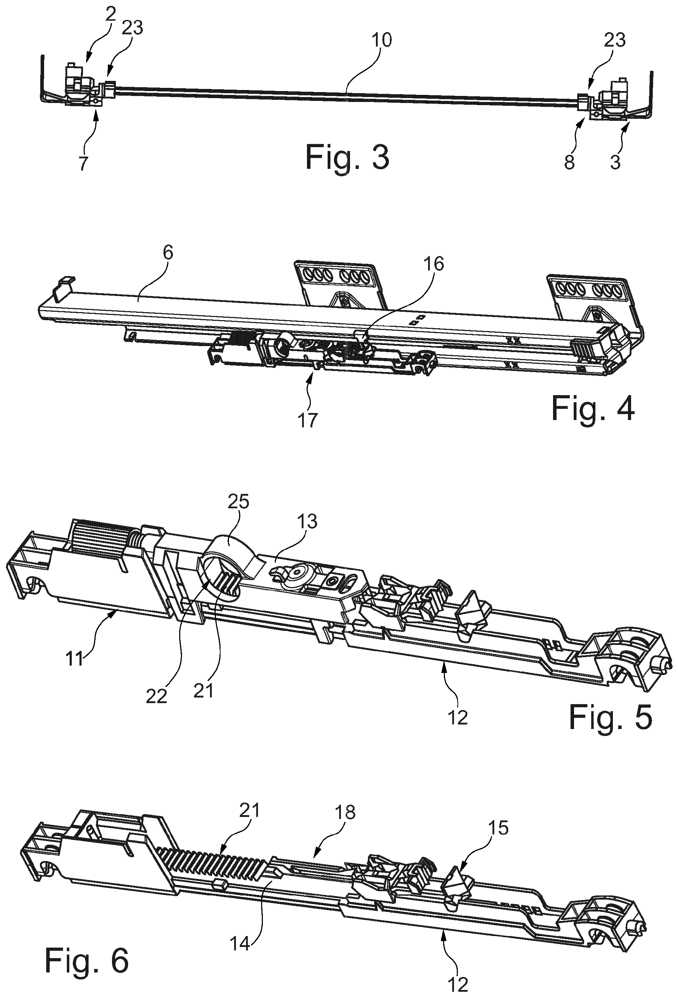

Fig. 3 die Anordnung aus Fig. 1 in einer Frontansicht,
Fig. 4 eine Führungseinheit mit einer Ausstoßeinheit gemäß der Anordnung aus Fig. 1 perspektivisch,
Fig. 5 die in Fig. 4 gezeigte Ausstoßeinheit vergrößert,
Fig. 6 die in Fig. 5 gezeigte Ausstoßeinheit ohne ein Anbindungsgehäuse,
Fig. 7 einen Ausschnitt der Ausstoßeinheit gemäß Fig. 5 von oben mit einem transparent dargestellten Deckel der Ausstoßeinheit,
Fig. 8 von oben einen Schlitten der Ausstoßeinheit gemäß Fig. 5 mit einem Verriegelungsbauteil umfassend ein Verriegelungsorgan,
Fig. 9 die Anordnung gemäß Fig. 8 ohne das Verriegelungsbauteil,
Fig. 10 das Verriegelungsbauteil aus Fig. 8 umfassend das Verriegelungsorgan perspektivisch in Alleinstellung,
Fig. 11 ein perspektivisch dargestelltes Adapterorgan gemäß der Schienenführung aus Fig. 1-3,
Fig. 12 das Adapterorgan gemäß Fig. 11 in einer anderen perspektivischen Darstellung,
Fig. 13 eine andere Führungseinheit und einen Teil einer alternativen Ausstoßeinheit in einer Darstellung gemäß Fig. 4,
Fig. 14 einen Schlitten der Ausstoßeinheit gemäß Fig. 13 vergrößert in perspektivischer Ansicht,
Fig. 15 einen Teil der Ausstoßeinheit aus Fig. 13 ohne ein Anbindungsgehäuse,
Fig. 16 die Anordnung gemäß Fig. 15 ohne ein Verriegelungsbauteil und

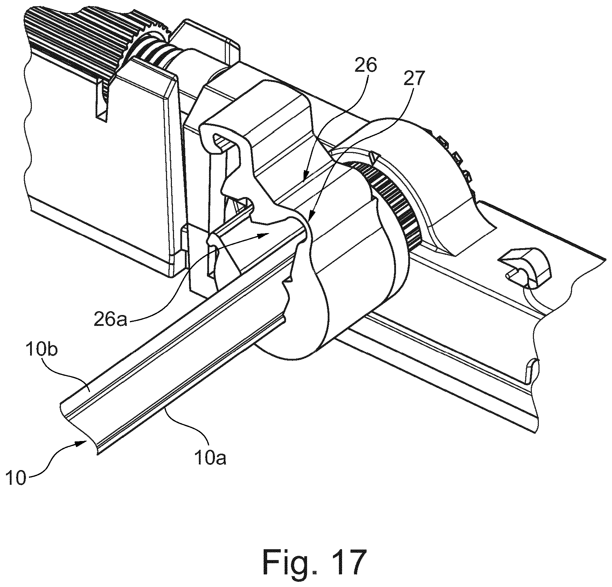

Fig. 17 einen vergrößerten Ausschnitt der Anordnung gemäß Fig. 2.

Für sich entsprechende Elemente unterschiedlicher Ausführungsbeispiele sind teils die gleichen Bezugszeichen verwendet.

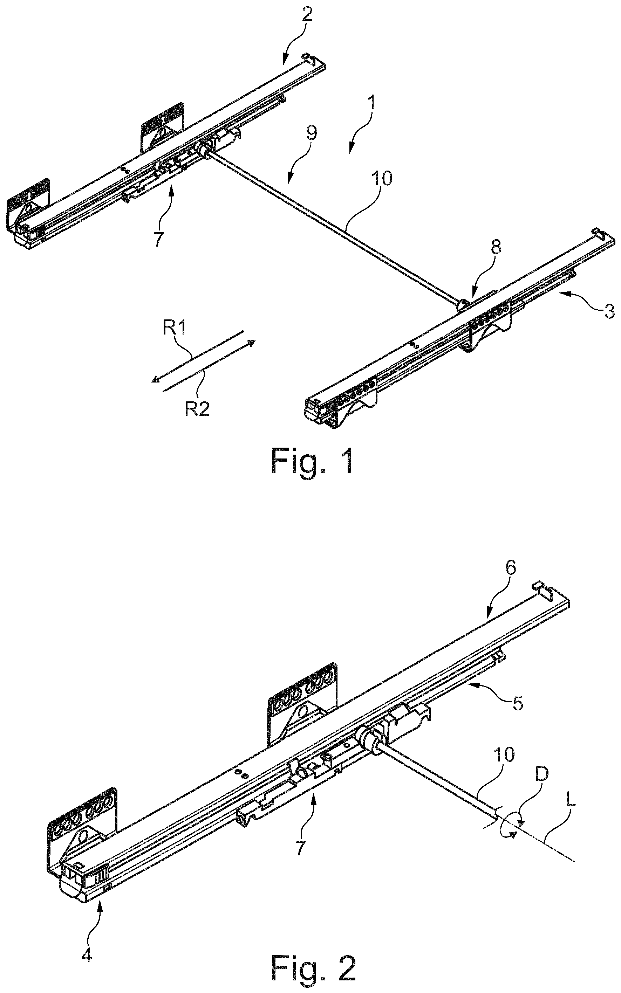

Fig. 1 zeigt eine Schienenführung 1 mit zwei Ausstoßeinheiten 7 und 8 für zwei Führungseinheiten 2 und 3, die jeweils als Vollauszug mit einer Festschiene 4, einer Mittelschiene 5 und einer Bewegungsschiene 6 ausgebildet sind. Die Ausstoßeinheiten umfassen eine erste zum Beispiel rechte Ausstoßeinheit 7 zur Bewegungssteuerung der rechten Führungseinheit 2 und eine zweite zum Beispiel linke Ausstoßeinheit 8 zur Bewegungssteuerung der linken Führungseinheit 3. Eine Synchronisationseinrichtung 9 umfasst ein Verbindungselement 10, das die Ausstoßeinheiten 7 und 8 verbindet.

Die beiden Führungseinheiten 2 und 3 dienen zur linearen Bewegungsführung einer Schublade an einem Möbelkorpus eines nicht dargestellten Möbels. Demgemäß ist die Bewegungsschiene 6 relativ zur fest am Möbelkorpus positionierbaren Festschiene 4 in eine Öffnungsrichtung R1 und in eine Schließrichtung R2 linear verschieblich.

Die Ausstoßeinheiten 7 und 8 umfassen jeweils einen in den Figuren verdeckten Kraftspeicher 11, ein Grundbauteil 12 mit einem Anbindungsgehäuse 13, einen zum Grundbauteil 12 verschieblichen Schlitten 14, an dem ein Klinkenorgan 15 vorhanden ist, das mit einem Mitnehmer 16 an der Bewegungsschiene 6 zusammenwirkt.

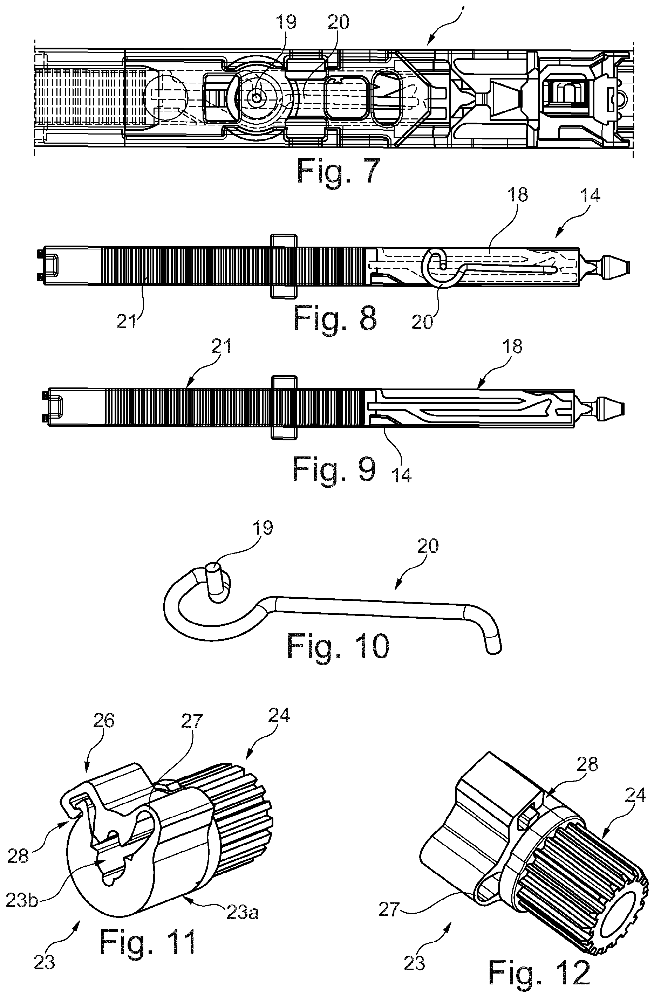

Die Ausstoßeinheiten 7, 8 umfassen eine Verriegelungsanordnung 17 mit einer Herzkurve 18 und einem entlang der Herzkurve 18 in Anlage bringbaren Verriegelungsorgan 19, das an einem Verriegelungsbauteil 20 vorhanden ist (s. Fig. 10).

Der Schlitten 14 weist eine Getriebekontur 21 auf, zur getrieblichen Bewegungskopplung der linearen Bewegung des Schlittens 14 und einer Drehbewegung D des Verbindungselements 10 um eine Längsachse L des Verbindungselements 10.

Eine Aufnahme 22 der Ausstoßeinheit 7, 8 ist ausgebildet zur Unterbringung eines Adapterorgans 23 (s. Fig. 11, 12). Das Adapterorgan 23 weist einen Aufnahmeabschnitt 23a mit einem Aufnahmevolumen 23b auf.

An dem Adapterorgan 23 ist ein Zahnkontur-Abschnitt 24 ausgebildet. Der Zahnkontur-Abschnitt 24 kämmt mit der Getriebekontur 21. Das Adapterorgan 23 ermöglicht eine lösbare Anbringung eines Endabschnitts des Verbindungselements 10.

Der zur Zahnkontur-Abschnitt 24 benachbarte Abschnitt des Adapterorgans 23 weist einen Verschlussabschnitt 26 auf, der über ein Filmscharnier 27 wie z. B. ein Gelenk schwenkbar ist relativ zum restlichen Adapterorgan 23. Der Verschlussabschnitt 26 ist mit seinem dem Filmscharnier 27 entfernten Ende über Rastmittel 28 verrastbar, zur Verrastung des Verschlussabschnitts 26 in seiner Schließstellung gemäß der Darstellung in den Figuren 11 und 12, allerdings ohne Verbindungselement 10 dargestellt, zur Sicherung eines eingelegten Verbindungselements 10.

Die Aufnahme 22 weist eine Wand 25 auf, welche umfänglich zur Drehachse des eingeführten Verbindungselements 10 ausgebildet ist.

Die Ausstoßeinheiten 7 und 8 funktionieren als Ausstoßvorrichtungen, an denen die Synchronisationseinrichtung 9 jeweils mit dem Adapterorgan 23 und dem Verbindungselement 10 anordenbar ist.

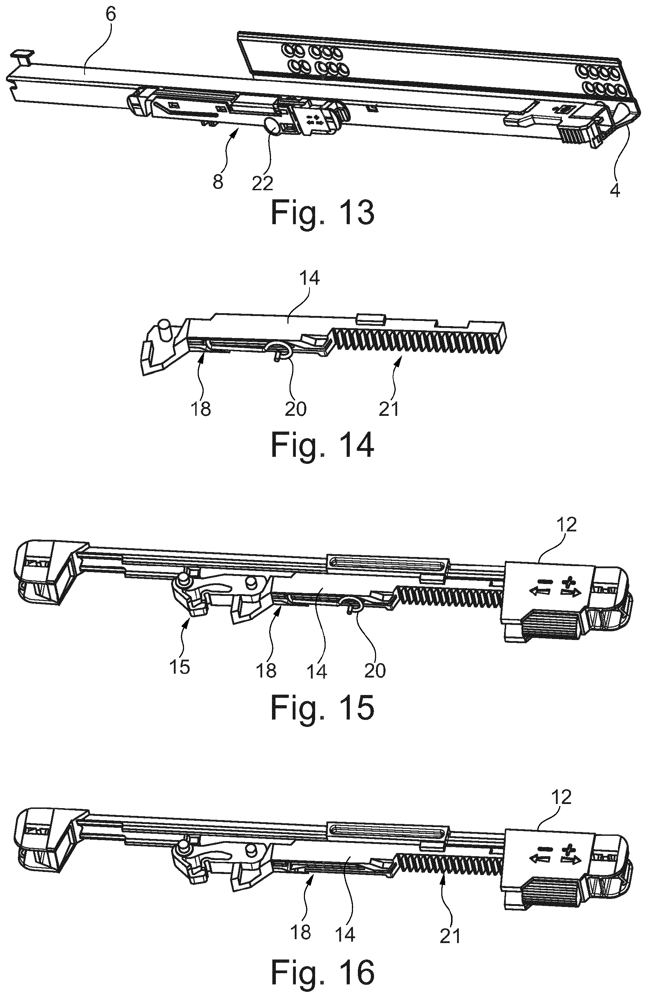

Bei der Ausstoßeinheit 8 für eine als Teilauszug ausgebildete Führungseinheit gemäß Figur 13 mit einer Festschiene 4 und einer Bewegungsschiene 6 ist eine Herzkurve 18 im Nutzzustand am Möbel nach unten weisend bzw. nach unten offen bzw. nach unten ausgerichtet, was die Fig. 14-16 verdeutlichen.

Die Ausstoßeinheit 8 weist die gleiche Funktionsweise auf wie die Ausstoßeinheit 7 bzw. 8 für die jeweils als Vollauszug ausgebildeten Führungseinheit 2 und 3. Die Ausstoßeinheit 8, die für die als Teilauszug ausgebildete Führungseinheit gemäß Figur 13 ausgebildet ist, ist an der Bewegungsschiene 6 angeordnet bzw. anordenbar. Der in Figur 13 nicht ersichtliche Mitnehmer, der mit dem Klinkenorgan 15 zusammenwirkt, ist an der Festschiene 4 vorhanden.

In Fig. 16 ist ein Verriegelungsbauteil 20 der Ausstoßeinheit 8 nicht dargestellt.

In den Fig. 15 und 16 ist ein Anbindungsgehäuse 13 der Ausstoßeinheit 8 nicht dargestellt.

Zum Beispiel weist die Außenform des Verbindungselements 10 eine Passkontur mit zwei radial zur Längsachse des Verbindungselements 10 gegenüberliegende Erhebungen 10a, 10b auf.

Zum Beispiel weist der Verschlussabschnitt 26 eine am Verbindungselement in Anlage bringbare Anlagekontur 26a auf, welche auf die Außenkontur des Verbindungselements 10 zur passenden Anlage in der Schließstellung des Verschlussabschnitts 26 am Verbindungselement 10 abgestimmt ist. Zum Beispiel liegt die Anlagekontur 26a dicht anliegend an einer Erhebung 10b und an dazu beidseitig benachbarten Abschnitten der Außenkontur des Verbindungselements 10 an.

### Bezugszeichenliste

- 1: Schienenführung
- 2: Führungseinheit
- 3: Führungseinheit
- 4: Festschiene
- 5: Mittelschiene
- 6: Bewegungsschiene
- 7: Ausstoßeinheit
- 8: Ausstoßeinheit
- 9: Synchronisationseinrichtung
- 10: Verbindungselement
- 10a: Erhebung
- 10b: Erhebung
- 11: Kraftspeicher
- 12: Grundbauteil
- 13: Anbindungsgehäuse
- 14: Schlitten
- 15: Klinkenorgan
- 16: Mitnehmer
- 17: Verriegelungsanordnung
- 18: Herzkurve
- 19: Verriegelungsorgan
- 20: Verriegelungsbauteil
- 21: Getriebekontur
- 22: Aufnahme
- 23: Adapterorgan
- 23a: Aufnahmeabschnitt
- 23b: Aufnahmevolumen
- 24: Zahnkontur-Abschnitt
- 25: Wand
- 26: Verschlussabschnitt
- 26a: Anlagekontur
- 27: Filmscharnier
- 28: Rastmittel

## Patentansprüche

1. Vorrichtung für die Bewegungssteuerung von zwei Führungseinheiten (2, 3), wobei die beiden Führungseinheiten (2, 3) jeweils eine Festschiene (4) und eine zur Festschiene (4) verschiebliche Bewegungsschiene (6) umfassen, wobei die Vorrichtung eine erste Ausstoßeinheit (7) und eine zweite Ausstoßeinheit (8) umfasst, die jeweils an einer zugehörigen Führungseinheit (2, 3) anordenbar und voneinander beabstandet sind, wobei eine Synchronisationseinrichtung (9) mit einem Verbindungselement (10) vorgesehen ist, wobei das Verbindungselement (10) ein separates Bauteil ist, welches die erste Ausstoßeinheit (7) und die zweite Ausstoßeinheit (8) miteinander verbindet, um die beiden Ausstoßeinheiten (7,8) zu synchronisieren, wobei die beiden Ausstoßeinheiten (7, 8) gleich aufgebaut sind, und wobei jede Ausstoßeinheit (7, 8) jeweils ein Adapterorgan (23) aufweist, an welchem ein jeweiliger Endabschnitt des Verbindungselements (10) lösbar anbringbar ist,
wobei das Adapterorgan (23) einen Aufnahmeabschnitt (23a) mit einem Aufnahmevolumen (23b) bereitstellt, in welchem der Endabschnitt des Verbindungselements (10) positionsfest unterbringbar ist relativ zum Adapterorgan (23), und wobei das Aufnahmevolumen (23b) bezogen auf den angebrachten Endabschnitt des Verbindungselements (10) über einen Teilumfang zu einer Längsachse des Endabschnitts des Verbindungselements (10) von einer festen Wand des Adapterorgans (23) umgeben ist und **dadurch gekennzeichnet, dass** über einen zum Teilumfang verbleibenden umfänglichen Abschnitt ein Verschlussabschnitt (26) des Adapterorgans (23) vorhanden ist, wobei der angebrachte Endabschnitt des Verbindungselements (10) an der festen Wand in Anlage kommt, und wobei der Verschlussabschnitt (26) am Adapterorgan (23) schwenkbar angelenkt ist und aus einer Offenstellung des Verschlussabschnitts (26) am Adapterorgan (23), in welcher das Aufnahmevolumen (23b) über den verbleibenden umfänglichen Abschnitt offen ist für ein Einbringen des Endabschnitts des Verbindungselements (10), reversibel in eine gesicherte Schließstellung des Verschlussabschnitts (26) verschwenkbar ist, wobei in der Schließstellung des Verschlussabschnitts (26) der verbleibende umfänglichen Abschnitt geschlossen ist.

2. Vorrichtung nach Anspruch 1, **dadurch gekennzeichnet, dass** das Adapterorgan (23) einteilig ausgebildet ist.

3. Vorrichtung nach Anspruch 1 oder 2, **dadurch gekennzeichnet, dass** der Verschlussabschnitt (26) des Adapterorgans (23) über ein Filmscharnier (27) mit dem verbleibenden Teil des Adapterorgans (23) verbunden ist.

4. Vorrichtung nach einem der vorhergehenden Ansprüche, **dadurch gekennzeichnet, dass** das Adapterorgan (23) Rastmittel (28) aufweist, mit welchen der Verschlussabschnitt (26) in der Schließstellung des Verschlussabschnitts (26) sicherbar ist.

5. Vorrichtung nach einem der vorhergehenden Ansprüche, **dadurch gekennzeichnet, dass** die Außenform des Endabschnitts des Verbindungselements (10) und die Innenform des Aufnahmeabschnitts (23a) aufeinander abgestimmt ausgebildet sind.

6. Vorrichtung nach einem der vorhergehenden Ansprüche, **dadurch gekennzeichnet, dass** ein Zahnkontur-Abschnitt (24) des Adapterorgans (23) vorhanden ist, wobei der Zahnkontur-Abschnitt (24) axial versetzt zu dem Aufnahmeabschnitt (23a) ausgebildet ist.

7. Vorrichtung nach einem der vorhergehenden Ansprüche, **dadurch gekennzeichnet, dass** beide Adapterorgane (23) an der jeweiligen Ausstoßvorrichtung (7, 8) gleichartig gestaltet sind.

8. Vorrichtung nach einem der vorhergehenden Ansprüche, **dadurch gekennzeichnet, dass** der Endabschnitt des Verbindungselements (10) außen in der Grundform zylindrisch gebildet ist mit einer in Längsrichtung des Verbindungselements (10) sich erstreckenden Passkontur.

9. Vorrichtung nach einem der vorhergehenden Ansprüche, **dadurch gekennzeichnet, dass** die Passkontur zwei radial zur Längsachse des Verbindungselements (10) gegenüberliegende Erhebungen (10a, 10b) aufweist.

10. Vorrichtung nach einem der vorhergehenden Ansprüche, **dadurch gekennzeichnet, dass** der Verschlussabschnitt (26) eine am Verbindungselement (10) in Anlage bringbare Anlagekontur (26a) aufweist, welche auf die Außenkontur des Verbindungselements (10) zur passenden Anlage in der Schließstellung des Verschlussabschnitts (26) abgestimmt ist.

11. Schienenführung (1) umfassend zwei Führungseinheiten (2, 3) mit jeweils einer mit einem Möbelkorpus verbindbaren Festschiene (4) und mit einer mit einem Möbelteil koppelbaren Bewegungsschiene (6), wobei eine Vorrichtung nach einem der Ansprüche 1 bis 10 vorhanden ist.

12. Möbel mit einem Möbelkorpus und einem bewegbaren Möbelteil, wobei eine Schienenführung (1) nach Anspruch 11 vorgesehen ist.

## Claims

1. Apparatus for movement control of two guide units (2, 3), wherein the two guide units (2, 3) comprise in each case one fixed rail (4) and one movement rail (6), which is displaceable in relation to the fixed rail (4), wherein the apparatus comprises a first pushing-out unit (7) and a second pushing-out unit (8), which are in each case arrangeable on an associated guide unit (2, 3) and spaced apart from one another, wherein provision is made of a synchronization device (9) with a connecting element (10), wherein the connecting element (10) is a separate component which connects the first pushing-out unit (7) and the second pushing-out unit (8) to one another in order to synchronize the two pushing-out units (7,8), wherein the two pushing-out units (7, 8) are of identical construction, and wherein each pushing-out unit (7, 8) has in each case one adaptor member (23) to which a respective end portion of the connecting element (10) is releasably attachable, wherein the adaptor member (23) provides a receiving portion (23a) with a receiving volume (23b) in which the end portion of the connecting element (10) is able to be accommodated in a positionally fixed manner relative to the adaptor member (23), and wherein the receiving volume (23b), in relation to the attached end portion of the connecting element (10), is surrounded by a fixed wall of the adaptor member (23) over a part of a periphery with respect to a longitudinal axis of the end portion of the connecting element (10), and **characterized in that**, over a remaining peripheral portion in relation to the part of the periphery, provision is made of a closure portion (26) of the adaptor member (23), wherein the attached end portion of the connecting element (10) comes into abutment with the fixed wall, and wherein the closure portion (26) is articulated in a pivotable manner on the adaptor member (23) and, from an open position of the closure portion (26) on the adaptor member (23), in which the receiving volume (23b) is open over the remaining peripheral portion for introduction of the end portion of the connecting element (10), is reversibly pivotable into a secured closed position of the closure portion (26), wherein the remaining peripheral portion is closed in the closed position of the closure portion (26).

2. Apparatus according to Claim 1, **characterized in that** the adaptor member (23) is formed in one piece.

3. Apparatus according to Claim 1 or 2, **characterized in that** the closure portion (26) of the adaptor member (23) is connected to the remaining part of the adaptor member (23) via a film hinge (27).

4. Apparatus according to one of the preceding claims, **characterized in that** the adaptor member (23) has latching means (28) by way of which the closure portion (26) is able to be secured in the closed position of the closure portion (26).

5. Apparatus according to one of the preceding claims, **characterized in that** the external shape of the end portion of the connecting element (10) and the internal shape of the receiving portion (23a) are configured to be matched to one another.

6. Apparatus according to one of the preceding claims, **characterized in that** provision is made of a tooth-contour portion (24) of the adaptor member (23), wherein the tooth-contour portion (24) is configured to be axially offset from the receiving portion (23a).

7. Apparatus according to one of the preceding claims, **characterized in that** the two adaptor members (23) on the respective pushing-out apparatuses (7, 8) are of identical design.

8. Apparatus according to one of the preceding claims, **characterized in that** the end portion of the connecting element (10) is formed so as to have a cylindrical basic shape at the outside with a fitting contour extending in the longitudinal direction of the connecting element (10).

9. Apparatus according to one of the preceding claims, **characterized in that** the fitting contour has two elevations (10a, 10b) situated radially opposite one another with respect to the longitudinal axis of the connecting element (10).

10. Apparatus according to one of the preceding claims, **characterized in that** the closure portion (26) has an abutment contour (26a) which is able to be brought into abutment with the connecting element (10) and which is matched to the outer contour of the connecting element (10) for fitting abutment in the closed position of the closure portion (26).

11. Rail guide (1) comprising two guide units (2, 3) which each have a fixed rail (4), connectable to a basic furniture structure, and have a movement rail (6), couplable to a furniture part, wherein provision is made of an apparatus according to one of Claims 1 to 10.

12. Piece of furniture having a basic furniture structure and having a movable furniture part, wherein provision is made of a rail guide (1) according to Claim 11.

## Revendications

1. Dispositif destiné à commander le déplacement de deux unités de guidage (2, 3), les deux unités de guidage (2, 3) comprenant chacune un rail fixe (4) et un rail de déplacement (6) pouvant coulisser par rapport au rail fixe (4), le dispositif comprenant une première unité d'éjection (7) et une seconde unité d'éjection (8), qui peuvent être disposées chacune sur une unité de guidage (2, 3) associée et sont séparées l'une de l'autre, un système de synchronisation (9) avec un élément de liaison (10) étant prévu, l'élément de liaison (10) étant un composant séparé, qui relie l'une à l'autre la première unité d'éjection (7) et la seconde unité d'éjection (8) pour synchroniser les deux unités d'éjection (7, 8), les deux unités d'éjection (7, 8) présentant la même structure, et chaque unité d'éjection (7, 8) comportant chacune un organe adaptateur (23), sur lequel une section d'extrémité respective de l'élément de liaison (10) peut être installée de manière amovible, l'organe adaptateur (23) fournissant une section de réception (23a) avec un volume de réception (23b), dans lequel la section d'extrémité de l'élément de liaison (10) peut être logée de manière solidaire en position par rapport à l'organe adaptateur (23), et le volume de réception (23b) étant entouré par une paroi fixe de l'organe adaptateur (23) sur une périphérie partielle par rapport à un axe longitudinal de la section d'extrémité de l'élément de liaison (10) par rapport à la section d'extrémité installée de l'élément de liaison (10), et **caractérisé en ce que** une section de fermeture (26) de l'organe adaptateur (23) est présente sur une section périphérique restant par rapport à la périphérie partielle, la section d'extrémité installée de l'élément de liaison (10) venant en appui sur la paroi fixe, et la section de fermeture (26) étant articulée de manière à pouvoir pivoter sur l'organe adaptateur (23) et pouvant pivoter depuis une position ouverte de la section de fermeture (26) sur l'organe adaptateur (23), dans lequel le volume de réception (23b) pour la section périphérique restante est ouvert pour introduire la section d'extrémité de l'élément de liaison (10), de manière réversible dans une position de fermeture bloquée de la section de fermeture (26), la section périphérique restante étant fermée dans la position de fermeture de la section de fermeture (26).

2. Dispositif selon la revendication 1, **caractérisé en ce que** l'organe adaptateur (23) est formé en une seule partie.

3. Dispositif selon la revendication 1 ou 2, **caractérisé en ce que** la section de fermeture (26) de l'organe adaptateur (23) est reliée à la partie restante de l'organe adaptateur (23) par un film-charnière (27).

4. Dispositif selon l'une des revendications précédentes, **caractérisé en ce que** l'organe adaptateur (23) comporte des moyens d'enclenchement (28), avec lesquels la section de fermeture (26) peut être bloquée dans la position de fermeture de la section de fermeture (26).

5. Dispositif selon l'une des revendications précédentes, **caractérisé en ce que** la forme extérieure de la section d'extrémité de l'élément de liaison (10) et la forme intérieure de la section de réception (23a) sont formées de manière adaptée l'une à l'autre.

6. Dispositif selon l'une des revendications précédentes, **caractérisé en ce qu'**une section de contour denté (24) de l'organe adaptateur (23) est présente, la section de contour denté (24) étant formée avec un décalage axial par rapport à la section de réception (23a).

7. Dispositif selon l'une des revendications précédentes, **caractérisé en ce que** deux organes adaptateurs (23) sont conçus de manière similaire sur le dispositif d'éjection (7, 8) respectif.

8. Dispositif selon l'une des revendications précédentes, **caractérisé en ce que** la section d'extrémité de l'élément de liaison (10) présente à l'extérieur une forme de base cylindrique avec un contour d'ajustement s'étendant dans la direction longitudinale de l'élément de liaison (10).

9. Dispositif selon l'une des revendications précédentes, **caractérisé en ce que** le contour d'ajustement comporte deux parties surélevées (10a, 10b) se faisant face radialement par rapport à l'axe longitudinal de l'élément de liaison (10).

10. Dispositif selon l'une des revendications précédentes, **caractérisé en ce que** la section de fermeture (26) comporte un contour d'appui (26a) pouvant être amené en appui sur l'élément de liaison (10), lequel est adapté au contour extérieur de l'élément de liaison (10) pour s'appuyer de manière ajustée dans la position de fermeture de la section de fermeture (26).

11. Système de guidage (1) de rail comprenant deux unités de guidage (2, 3) avec chacune un rail fixe (4) pouvant être relié à un corps de meuble et avec un rail de déplacement (6) pouvant être couplé à une partie de meuble, un dispositif selon l'une des revendications 1 à 10 étant présent.

12. Meuble avec un corps de meuble et une partie de meuble mobile, un système de guidage (1) de rail selon la revendication 11 étant prévu.
